Europäisches Patentamt

European Patent Office

Office européen des brevets

(11) Numéro de publication: **0 230 181 B1**

(12) **FASCICULE DE BREVET EUROPEEN**

(45) Date de publication du fascicule du brevet: **13.06.90**

(51) Int. Cl.⁵: **B64C 9/02**

(21) Numéro de dépôt: **86402780.0**

(22) Date de dépôt: **12.12.86**

(54) Système de couplage de deux volets d'une aile d'aéronef, et aile d'aéronef équipée d'un tel système.

(30) Priorité: **13.12.85 FR 8518515**

(43) Date de publication de la demande:
**29.07.87 Bulletin 87/31**

(45) Mention de la délivrance du brevet:
**13.06.90 Bulletin 90/24**

(84) Etats contractants désignés:
**DE ES IT NL SE**

(56) Documents cités:
**EP-A- 0 084 396**
**FR-A- 2 443 380**

(73) Titulaire: **AEROSPATIALE Société Nationale Industrielle, 37, Boulevard de Montmorency, F-75781 Paris Cédex 16(FR)**

(72) Inventeur: **Poccard, Jacques, Montaigut sur Save, F-31530 Levignac(FR)**

(74) Mandataire: **Bonnetat, Christian et al, CABINET BONNETAT 23, Rue de Léningrad, F-75008 Paris(FR)**

## Description

La présente invention concerne un système de couplage de deux volets d'une aile d'aéronef, lesdits volets étant adjacents et situés au moins sensiblement dans le prolongement l'un de l'autre, et chaque volet ayant ses propres moyens de pivotement et d'actionnement, ainsi qu'une aile d'aéronef équipée de ce système.

On connaît déjà des sytèmes de couplage de deux volets adjacents d'une aile d'aéronef comprenant un couplage mécanique qui relie les deux volets et qui est destiné à assurer un fonctionnement de ces derniers en synchronisme.

En particulier, sur les avions pourvus d'un système de volets hypersustentateurs comprenant deux volets par demivoilure, chaque volet se déplace par rotation autour d'un axe situé à l'extérieur du profil de voilure en étant commandé, par exemple, par un vérin hydraulique. La synchronisation des déplacements relatifs des deux volets est obtenue par l'intermédiaire dudit couplage mécanique. Cependant, l'inconvénient essentiel de ce type de système réside en ce qu'en cas de défaillance du couplage mécanique entre les deux volets, la synchronisation des déplacements de ceux-ci n'est, bien entendu, plus assurée. Les volets peuvent alors rester bloqués en position de sortie, ce qui entraîne une diminution des performances de l'aéronef, un déséquilibre aérodynamique de celui-ci et une consommation excessive de carburant.

Par le document EP-A 0 084 396, on connaît de plus un système pour le couplage de deux volets d'une aile d'aéronef, adjacents et situés au moins sensiblement dans le prolongement l'un de l'autre, chaque volet ayant ses propres moyens de pivotement et d'actionnement, le système comprenant, entre lesdits volets, un couplage mécanique qui est destiné à assurer un fonctionnement de ces derniers en synchronisme, ainsi qu'une liaison mécanique sollicitée en cas de défaillance du couplage mécanique, et des moyens de signalisation étant prévus pour signaler la défaillance dudit couplage mécanique.

Dans le système du document EP-A 0 084 396, cette liaison mécanique est constituée par une tringlerie articulée susceptible de transmettre des efforts de traction, mais non des efforts de cisaillement. La structure même de cette liaison interdit donc à cette dernière de résister aux efforts importants, perpendiculaires aux volets, qui s'exercent sur ceux-ci en cas de défaillance du couplage. En fait, ladite liaison mécanique constitue un simple moyen d'actionner l'un ou l'autre de deux contacts pour stopper la commande des volets et éviter d'accroître l'importance de la défaillance.

Ainsi, en cas de défaillance dudit couplage, la liaison mécanique sert de détecteur de défaillance et actionne les moyens de commande des volets pour bloquer ceux-ci en position.

Il en résulte donc l'inconvénient mentionné ci-dessus et consistant en ce que les volets peuvent rester en position de sortie, ce qui entraîne une diminution des performances de l'aéronef, un déséquilibre de celui-ci et une consommation excessive de carburant.

La présente invention a donc pour objet d'éviter cet inconvénient en proposant un système de couplage entre deux volets d'une aile d'aéronef, qui est susceptible de rester faible même en cas de défaillance du couplage mécanique reliant lesdits deux volets et qui permet, de plus, de détecter, de façon sûre, la défaillance du couplage mécanique habituel.

A cette fin, selon l'invention, le système de couplage du type mentionné ci-dessus est caractérisé en ce que ladite liaison mécanique est susceptible d'accomplir la fonction du couplage mécanique en cas de défaillance de celui-ci et en ce que lesdits moyens de signalisation sont constitués par un organe mécanique comprenant au moins un levier susceptible de basculer entre deux positions dont la première correspond au fonctionnement normal du couplage mécanique, position dans laquelle le levier n'est pas apparent, et la seconde correspond à une défaillance dudit couplage mécanique, le levier devenant alors apparent.

Ainsi, ladite liaison mécanique peut remplacer complètement le couplage mécanique et le levier constitue un avertisseur permanent — et non pas fugitif — de la défaillance du couplage mécanique.

Selon une particularité avantageuse de la présente invention, ledit système est de plus caractérisé en ce que:
— ladite liaison mécanique comporte au moins un doigt solidaire de l'un desdits volets et engagé, avec un jeu prédéterminé, dans un logement prévu dans l'autre volet;
— un verrou est prévu pour bloquer ledit levier dans sa première position non apparente ; et
— des moyens de détection sont prévus pour détecter la position dudit doigt, lesdits moyens de détection agissant sur ledit verrou pour permettre audit levier de prendre sa seconde position apparente.

Le couplage mécanique peut comprendre au moins une bielle dont la direction générale est sensiblement perpendiculaire à l'envergure de l'aile, et qui est disposée entre les volets adjacents, en étant articulée, à une extrémité, à l'un desdits volets et, à l'autre extrémité, à l'autre volet.

Il est avantageux que ledit levier bascule sous l'action de son propre poids de sa première à sa seconde position, lorsque le verrouillage entre ledit verrou et ledit levier est supprimé par lesdits moyens de détection.

De préférence, lesdits moyens de détection entraînent le pivotement dudit verrou, ledit verrou coopérant avec une saillie du levier, le pivotement dudit verrou permettant de libérer la liaison entre le verrou et le levier, de sorte que ce dernier bascule dans ladite seconde position. Ces moyens de détection peuvent comporter au moins un organe basculant par suite d'un déplacement prédéterminé dudit doigt dans son logement.

Dans un mode de réalisation particulier, on peut prévoir deux organes basculants enserrant ledit doigt avec jeu, à la manière des mors d'une pince.

Les figures du dessin annexé feront bien comprendre comment l'invention peut être réalisée.

La figure 1 est une vue schématique en plan d'une aile d'aéronef comportant un volet hypersustentateur interne et un volet hypersustentateur externe, ainsi que d'une partie du fuselage de l'aéronef.

La figure 2 est une vue agrandie en coupe partielle avec arrachement, de la zone A de la fig. 1, montrant le couplage mécanique et la liaison mécanique de secours selon l'invention.

La figure 3 est une vue en coupe schématique dans le plan dé la fente séparant les deux volets, montrant l'organe de signalisation de l'invention en position non apparente.

La figure 4 est une vue similaire à la figure 3 montrant l'organe mécanique de signalisation selon l'invention en position apparente.

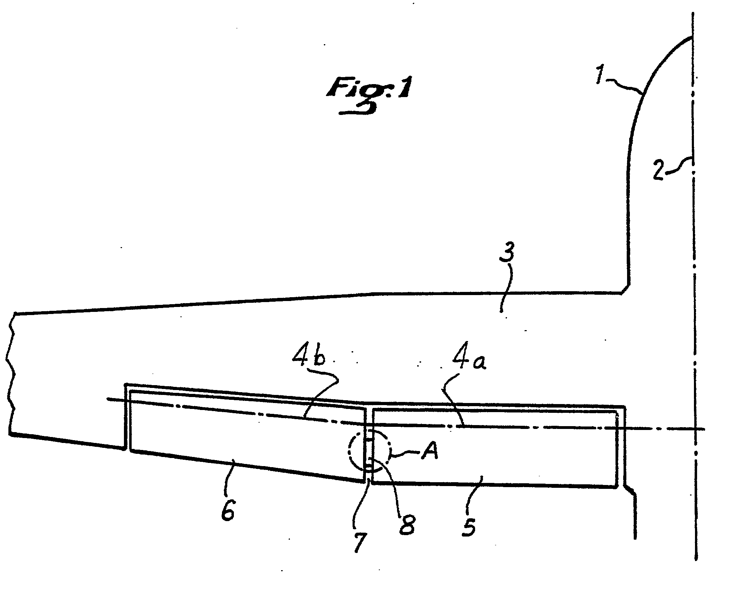

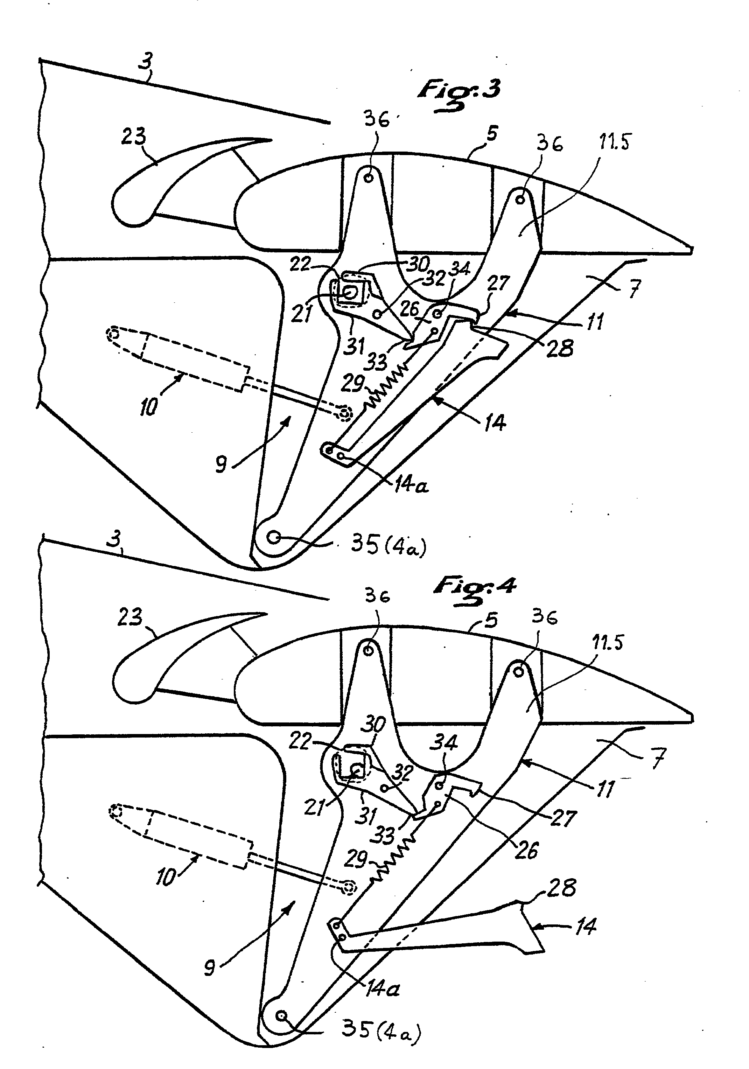

Sur les figures 3 et 4, seule la liaison mécanique de secours entre lesdits volets hypersustentateurs interne et externe est montrée, ledit couplage mécanique n'ayant pas été représenté pour des raisons de clarté du dessin. De plus, sur les figures 1 à 4, des références identiques désignent des éléments identiques ou semblables.

Sur la figure 1, on a représenté une partie de fuselage 1, d'axe longitudinal 2, d'un aéronef comportant une aile ou demi-voilure 3 munie d'un volet interne 5 et d'un volet externe 6, séparés par une fente 7, dans laquelle est prévu un système mécanique de couplage 8 des deux volets. De façon habituelle, les deux volets 5 et 6, qui sont, par exemple, des volets hypersustentateurs, peuvent se déplacer en rotation autour d'axes respectifs 4a et 4b, situés à l'extérieur du profil de la voilure. Comme on peut le voir plus en détail sur les figures 3 et 4 qui montrent plus spécialement le volet 5 en vue de côté, chacun desdits volets 5 et 6 est commandé par ses propres moyens 9 de pivotement et d'actionnement, comportant, en particulier, un vérin hydraulique 10 et un support basculant 11. A sa partie inférieure, chaque support basculant 11 comporte une articulation 35 pour le pivotement du volet 5 (ou 6) autour de l'axe 4a (ou 4b) et, à sa partie supérieure, des moyens de fixation 36 du volet 5 (ou 6).

Les axes de rotation 4a, 4b de chacun des deux volets 5 et 6 peuvent être alignés, ou être simplement concourants dans la zone de jonction des deux volets et présenter entre eux, comme représenté sur la figure 1, un décalage angulaire résultant de la géométrie de la voilure.

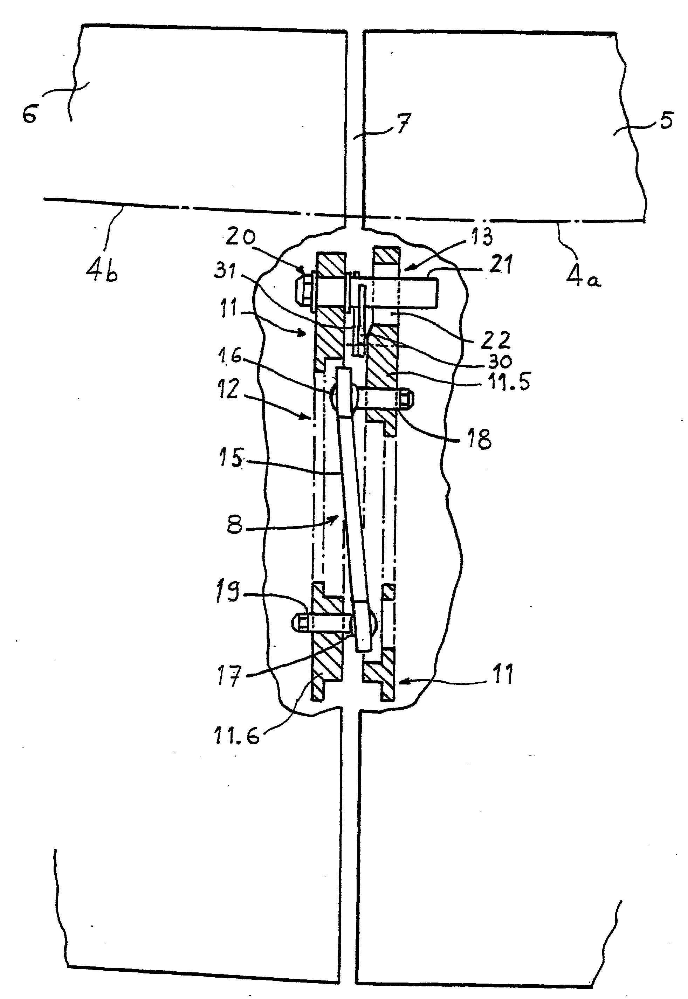

En se référant plus particulièrement à la figure 2, le système 8 de couplage des deux volets 5 et 6 comprend, de façon habituelle, un couplage mécanique 12 reliant les deux volets 5 et 6, et qui est destiné à assurer un fonctionnement de ces derniers en synchronisme.

Selon l'invention, le système 8 de couplage des deux volets 5 et 6 comprend de plus une liaison mécanique de secours 13 susceptible d'accomplir la fonction du couplage mécanique 12 en cas de défaillance de celui-ci, et, en outre, le tranfert de fonction entre le couplage mécanique 12 et la liaison mécanique de secours 13 entraîne le déplacement d'au moins un organe mécanique de signalisation 14, cet organe mécanique de signalisation étant représenté sur les figures 3 et 4.

En se référant à la figure 2, le couplage mécanique 12 comprend une bielle 15 dont la direction générale est sensiblement perpendiculaire à l'envergure de l'aile 3, et qui est disposée dans la fente 7 entre les volets 5 et 6 adjacents. La bielle 15 est articulée, à une extrémité, à l'un desdits volets et, à l'autre extrémité, à l'autre volet. Dans l'exemple représenté sur la figure 2, les extrémités de la bielle 15 coopèrent avec des rotules 16,17 portées, respectivement, par des axes 18 et 19. Ces axes 18 et 19 sont respectivement solidaires des parties adjacentes 11.5 et 11.6 des deux supports basculants 11 des volets 5 et 6.

La liaison mécanique de secours 13, disposée entre les volets 5 et 6 adjacents, comprend un diogt 21 solidaire d'un desdits volets (sur la figure 2, le doigt 21 est fixé en 20 à la partie 11.6 du support basculant 11 du volet 6). Le doigt 21 fait saillie par rapport audit volet 6 en direction du volet 5 et est engagé, avec un jeu prédéterminé, dans un logement 22 prévu dans la partie 11.5 du support basculant 11 dudit volet 5.

Sur les figures 3 et 4, on peut voir que l'organe mécanique de signalisation 14 comprend, dans l'exemple représenté, un levier susceptible de basculer, lors du transfert de fonction entre le couplage mécanique 12 et la liaison mécanique de secours 13, entre deux positions dont la première correspond au fonctionnement normal du couplage mécanique 12, position dans laquelle le levier 14 n'est pas apparent (figure 3), et la seconde correspond à und défaillance dudit couplage mécanique 12 et à la mise en action de la liaison mécanique de secours 13, le levier 14 devenant alors apparent (figure 4).

Le levier 14 peut être logé, en position non apparente, dans un carter (non représenté) et, lors de son basculement, passer à travers une fente dont est muni le carter.

En particulier, la mise en action de la liaison mécanique de secours 13 entraîne le pivotement d'un verrou 26 bloquant le levier 14 en position non apparente (figure 3) et qui est muni d'un cliquet 27 susceptible de coopérer avec une saillie 28 du levier 14. Le pivotement du verrou 26, à l'encontre de moyens de rappel 29, permet de libérer la liaison entre celui-ci et le levier 14, de sorte que ce dernier bascule, autour de l'axe 14a, dans la position apparente montrée sur la figure 4. les moyens de rappel 29 sont par exemple réalisés sous forme d'un ressort, disposé entre le verrou 26 et l'extrémité du levier 14 autour de laquelle ce dernier peut pivoter.

Dans l'exemple représenté, le pivotement du verrou 26 est obtenu par déplacement d'au moins un organe basculant 30,31 par suite d'un déplacement prédéterminé du doigt 21 dans son logement 22. En particulier, on peut prévoir deux organes basculants 30 et 31 pouvant pivoter autour d'un axe 32 et enserrant ledit doigt saillant 21, à la manière des mors d'une pince, la rotation de l'extrémité 33 de l'un ou l'autre desdits organes 30 et 31, ou des deux, entraînant la rotation du verrou 26 autour de son axe 34, ce qui libère le levier 14.

On décrira maintenant plus en détail le fonctionnement du système de l'invention.

Au cours d'un vol, trois possibilités peuvent se présenter.

Dans les cas normaux de fonctionnement, chaque vérin 10 équilibre au moins approximativement la charge aérodynamique du volet qui lui est associé. Il revient alors seulement à la bielle 15 d'assurer la synchronisation des rotations des volets 5 et 6 et de transmettre un effort faible correspondant à l'équilibrage des efforts aérodynamiques et des efforts des vérins entre les deux volets.

Dans le cas où pour une raison quelconque, comme un blocage de volet ou la rupture d'une attache de vérin, la synchronisation des déplacements en rotation des deux volets adjacents 5 et 6 n'est plus réalisée, la bielle 15 assure la liaison entre les volets 5 et 6 en étant capable de transmettre l'effort correspondant à l'entraînement d'un volet.

Dans le cas d'une rupture ou d'une déconnexion de la bielle 15, la liaison mécanique de secours 13 entre en action. Le doigt 21 solidaire d'un volet vient en contact avec les parois du logement 22 prévu dans le volet adjacent, de façon à assurer la synchronisation des volets avec un léger décalage correspondant au jeu entre le doigt 21 et son logement 22. Il est à noter que ce décalage est réduit et disparaît lorsque les volets sont rentrés. Ainsi, s'il y a défaillance de la bielle 15 comme organe de liaison entre les volets pour assurer la synchronisation de leur déplacement, la liaison mécanique de secours 13 selon l'invention la remplace intégralement dans ses fonctions. Le transfert de fonction entre le couplage mécanique 12 et la liaison mécanique de secours 13, entraîne, de plus, le déplacement de l'organe mécanique de signalisation 14.

Comme indiqué précédemment, les deux organes basculants 30 et 31 pivotent autour de l'axe 32 sous l'action du doigt 21, le déplacement par rotation de l'extrémité 33 de l'un des organes 30 ou 31, ou des deux, entraînant la rotation du verrou 26 autour de l'axe 34 ce qui libère le levier 14. Ce dernier ainsi relâché pivote sous l'action de son propre poids autour de l'axe 14a et, en passant à travers la fente du carter, devient apparent. Ce levier peut être peint en une couleur voyante, par exemple en rouge, ce qui le rend plus visible quand il est sorti. Ainsi, on peut se rendre compte immédiatement, au sol, si la liaison mécanique de secours a été utilisée et s'il faut, en conséquence, prévoir un remplacement de la bielle 15, par exemple. On élimine de ce fait le risque d'une panne dormante. On notera que le système de l'invention, bien que simple, est particulièrement faible, la liaison mécanique de secours pouvant assurer intégralement la fonction du couplage mécanique classique et sa mise en action est signalée, grâce à l'invention, de façon sûre.

**Revendications**

1. Système pour le couplage de deux volets d'une aile d'aéronef, adjacents et situés au moins sensiblement dans le prolongement l'un de l'autre, chaque volet ayant ses propres moyens de pivotement et d'actionnement, le système comprenant, entre lesdits volets, un couplage mécanique (12, 15) qui est destiné à assurer un fonctionnement de ces derniers en synchronisme, ainsi qu'une liaison mécanique (13, 21, 22) sollicitée en cas de défaillance du couplage mécanique (12), et des moyens de signalisation étant prévus pour signaler la défaillance dudit couplage mécanique (12), caractérisé en ce que ladite liaison mécanique (13, 21, 22) est susceptible d'accomplir la fonction du couplage mécanique (12) en cas de défaillance de celui-ci et en ce que lesdits moyens de signalisation sont constitués par un organe mécanique (14) comprenant au moins un levier susceptible de basculer entre deux positions dont la première correspond au fonctionnement normal du couplage mécanique (12), position dans laquelle le levier (14) n'est pas apparent, et la seconde correspond à une défaillance dudit couplage mécanique (12), le levier (14) devenant alors apparent.

2. Système selon la revendication 1, caractérisé en ce que:
   – ladite liaison mécanique (13, 21, 22) comporte au moins un doigt (21) solidaire de l'un desdits volets et engagé, avec un jeu prédéterminé, dans un logement (22) prévu dans l'autre volet;
   – un verrou (26) est prévu pour bloquer ledit levier (14) dans sa première position non apparente; et
   – des moyens de détection (30, 31) sont prévus pour détecter la position dudit doigt (21), lesdits moyens de détection agissant sur ledit verrou (26) pour permettre audit levier (14) de prendre sa seconde position apparente.

3. Système selon l'une des revendications 1 ou 2, caractérisé en ce que le couplage mécanique (12) comprend au moins une bielle (15) dont la direction générale est sensiblement perpendiculaire à l'envergure de l'aile (3), et qui est disposée entre les volets adjacents (5 et 6), en étant articulé, à une extrémité, à l'un desdits volets et, à l'autre extrémité, à l'autre volet.

4. Système selon l'une des revendications 1 à 3, caractérisé en ce que ledit levier (14) bascule sous l'action de son propre poids de sa première à sa seconde position, lorsque le verrouillage entre ledit verrou et ledit levier est supprimé par lesdits moyens de détection.

5. Système selon l'une des revendications 2 à 4, caractérisé en ce que lesdits moyens de détection entraînent le pivotement dudit verrou (26), ledit verrou coopérant avec une saillie (28) du levier (14), le pivotement dudit verrou permettant de libérer la liaison entre le verrou (26) et le levier (14), de sorte que ce dernier bascule dans ladite seconde position.

6. Système selon la revendication 5, caractérisé en ce que lesdits moyens de détection comportent au moins un organe (30, 31) basculant par suite d'un déplacement prédéterminé dudit doigt (21) dans son logement (22).

7. Système selon la revendication 6, caractérisé en ce qu'il comporte deux organes basculants (30 et 31) enserrant ledit doigt avec jeu, à la manière des mors d'une pince.

8. Aile d'aéronef, caractérisé en ce qu'elle est équipée d'au moins un système selon l'une quelconque des revendications 1 à 7.

**Patentansprüche**

1. System zur Kopplung der beiden benachbarten und im wesentlichen in Verlängerung zueinander angebrachten Luftklappen einer Tragfläche eines Luftfahrzeuges, wobei jede Luftklappe mit eigenen Mitteln zum Verschwenken und Betätigen ausgerüstet ist und das System zwischen den beiden Luftklappen eine mechanische Kopplung (12, 15), die zur Sicherung deren synchroner Funktion vorgesehen ist, ebenso wie eine mechanische Verbindung (13, 21, 22) aufweist, die im Fehlerfall der mechanischen Kopplung (12) in Anspruch genommen wird, und wobei Anzeigemittel vorgesehen sind, welche den Fehlerfall der mechanischen Kopplung (13, 21, 22) anzeigen, dadurch gekennzeichnet, daß die mechanische Verbindung (13, 21, 22) die Funktion der mechanischen Kopplung (12) im Fehlerfall derselben übernehmen kann und daß die Anzeigemittel aus einem mechanischen Organ (14) mit wenigstens einem Hebel (14) bestehen, der sich zwischen zwei Positionen bewegen kann, deren erste der normalen Funktion der mechanischen Kopplung (12) entspricht und in der der Hebel (14) nicht sichtbar ist, und deren zweite dem Fehlerfall der mechanischen Kopplung (12) entspricht und in der der Hebel (14) nunmehr sichtbar ist.

2. System nach Anspruch 1, dadurch gekennzeichnet, daß:
- die mechanische Verbindung (13, 21, 22) wenigstens einen festen mit einer der Luftklappen verbundenen Zapfen (21) aufweist, der mit einem vorgegebenen Spiel in eine Aufnahme (22) in der anderen Luftklappe eingreift;
- ein Riegel (26) zum Blockieren des Hebels (14) in seiner ersten, nicht sichtbaren Position vorgesehen ist; und daß
- Erfassungsmittel (30, 31) zum Erfassen der Position des Zapfens (21) vorgesehen sind, wobei diese Erfassungsmittel auf den Riegel (26) wirken, um dem Hebel (14) zu erlauben, die zweite, sichtbare Position einzunehmen.

3. System nach einem der Ansprüche 1 oder 2, dadurch gekennzeichnet, daß die mechanische Kopplung (12) wenigstens eine Koppelstange (15) aufweist, deren allgemeine Richtung im wesentlichen senkrecht zur Spannweite der Tragfläche (3) ist und die zwischen den benachbarten Luftklappen (5 und 6) derart angebracht ist, daß sie an einem Ende an einer der Luftklappen und am anderen Ende an der anderen Luftklappe schwenkbar gelagert ist.

4. System nach einem der Ansprüche 1 bis 3, dadurch gekennzeichnet, daß der Hebel (14) sich unter Wirkung seines Eigengewichts aus seiner ersten in seine zweite Position bewegt, wenn die Verriegelung zwischen dem Riegel (26) und dem Hebel (14) durch die Erfassungsmittel (30, 31) aufgehoben ist.

5. System nach einem der Ansprüche 2 bis 4, dadurch gekennzeichnet, daß die Erfassungsmittel (30, 31) das Verschwenken des Riegels (26) bewirken, wobei der Riegel (26) mit einem Vorsprung (28) des Hebels (14) zusammenwirkt und das Verschwenken des Riegels (26) die Verbindung zwischen dem Riegel (26) und dem Hebel (14) aufzuheben erlaubt, so daß der letztere sich in die zweite Position bewegt.

6. System nach Anspruch 5, dadurch gekennzeichnet, daß die Erfassungsmittel mindestens ein Element (30, 31) aufweisen, das sich bei einer vorgegebenen Verschiebung des Zapfens (21) in seiner Aufnahme (22) bewegt.

7. System nach Anspruch 6, dadurch gekennzeichnet, daß es zwei sich bewegende Elemente (30 und 31) aufweist, die den Zapfen (21) mit Spiel in der Art der Backen einer Zange einspannen.

8. Tragfläche eines Luftfahrzeugs, dadurch gekennzeichnet, daß sie mit mindestens einem System nach einem der Ansprüche 1 bis 7 ausgerüstet ist.

**Claims**

1. System for coupling together two flaps of an aircraft wing, adjacent and situated at least substantially in the extension of each other, each flap having its own pivoting and drive means, the system including, between said flaps, a mechanical coupling (12, 15) intended to ensure synchronized operation thereof, as well as a mechanical connection (13, 21, 22) urged in case of failure of the mechanical coupling (12), and signalling means being provided for signalling failure of said mechanical coupling (12), characterized in that said mechanical connection (13, 21, 22) is capable of taking over the function of the mechanical coupling (12) in case of failure thereof, and in that said signalling means consist of a mechanical member (14) comprising at least one lever capable of pivoting between two positions, the first of which corresponds to normal operation of the mechanical coupling (12), in which position the lever (14) is not visible, and the second of which corresponds to a failure of said mechanical coupling (12), the lever (14) then becoming visible.

2. System according to claim 1, characterized in that:
- said mechanical connection (13, 21, 22) comprises at least one finger (21) integral with one of said flaps and engaged, with a predetermined play, in a housing (22) provided in the other flap;
- a latch (26) is provided for locking said lever (14) in its first non visible position; and
- detecting means (30, 31) are provided for detecting the position of said finger (21), said detecting means acting on said latch (26) to allow said lever (14) to take its second visible position.

3. System according to one of claims 1 or 2, characterized in that the mechanical coupling (12) includes at least one link (15) whose general direction is substantially perpendicular to the span of the wing (3), and which is disposed between the adjacent flaps (5 and 6), while being articulated at one end to one of said flaps and at the other end to the other flap.

4. System according to one of claims 1 to 3, characterized in that said lever (14) pivots under the action of its own weight from its first to its second position, when locking between said latch and said lever is suppressed by said detecting means.

5. System according to one of claims 2 to 4, characterized in that said detecting means cause pivoting of said latch (26), said latch cooperating with a projection (28) of the lever (14), pivoting of said latch allowing to release the connection between the latch (26) and the lever (14), so that the latter pivots into said second position.

6. System according to claim 5, characterized in that said detecting means comprise at least one member (30, 31) which pivots following a predetermined movement of said finger (21) within its housing (22).

7. System according to claim 6, characterized in that it comprises two pivoting members (30 and 31) enclosing said finger with play in the manner of the jaws of a gripper.

8. Aircraft wing equipped with a least one system according to any one of claims 1 to 7.

*Fig.1*

*Fig. 2*

EP 0 230 181 B1

Fig. 3

Fig. 4